# EUROPÄISCHE PATENTSCHRIFT

(11) **EP 1 279 540 B1**
(45) Veröffentlichungstag und Bekanntmachung des Hinweises auf die Patenterteilung: **14.02.2007**
(21) Anmeldenummer: 02012877.3
(22) Anmeldetag: 11.06.2002
(51) Int. Cl.: B60J 7/20, B60J 7/14

(54) **Cabriolet-Fahrzeuge mit einem Deckelteil im rückwärtigen Fahrzeugbereich**
Convertible vehicles with a cover part in the rear vehicle area
Voitures cabriolet avec une partie couvercle dans la partie arrière du véhicule

(30) Priorität: 20.07.2001 DE 10135581
(43) Veröffentlichungstag der Anmeldung: 29.01.2003
(73) Patentinhaber: Wilhelm Karmann GmbH, 49084 Osnabrück (DE)
(72) Erfinder: Im Sande, Holger, 49082 Osnabrück (DE)

(56) Entgegenhaltungen:
- US-A- 5 823 606
- US-A- 6 092 335
- US-B1- 6 193 300
- US-B1- 6 250 707

## Beschreibung

Die Erfindung betrifft ein Cabriolet-Fahrzeug nach dem Oberbegriff des Anspruchs 1.

Die DE 44 45 944 C1 zeigt ein Cabriolet-Fahrzeug gemäß dem Oberbegriff des Anspruchs 1 sowie ein Verfahren gemäß dem Oberbegriff des Anspruchs 10, bei dem ein Deckelteil an einen Hilfsrahmen angebunden ist und einerseits zur Freigabe einer Durchtrittsöffnung für das Dach und andererseits zur Freigabe einer Aufnahmeöffnung für Gepäck beweglich ist. Dieser Hilfsrahmen, der bei Öffnung des Deckelteils zur Freigabe der Durchtrittsöffnung für das Dach mit aufschwenkt und dabei das Deckelteil unterstützend untergreift, ist unterhalb eines heckseitigen Abschlußbereiches mit einer Schwenkachse versehen, um die herum der Hilfsrahmen mit dem Deckelteil beweglich ist. Es ist erforderlich, daß im Bereich der Rückleuchten bzw. der unteren Abschlußkante des rückwärtigen Bereiches des Deckelteils Raum geschaffen wird, um die Schwenkachse aufnehmen zu können. Dieses erfordert, daß der rückwärtige Abschluß des Deckelteils relativ hoch gelegen ist, was eine wünschenswerte niedrige Plazierung der Ladekante verhindert. Zudem ist die Einbaulage der Rückleuchten dadurch eingeschränkt. Die Designmöglichkeiten bei der Fahrzeugheckgestaltung sind somit begrenzt.

Der Erfindung liegt das Problem zugrunde, hier eine Verbesserung zu schaffen.

Die Erfindung löst dieses Problem durch ein Cabriolet-Fahrzeug mit den Merkmalen des Anspruchs 1 sowie durch ein Verfahren zur Betätigung eines Deckelteils eines Cabriolet-Fahrzeug mit den Merkmalen des Anspruchs 10. Hinsichtlich vorteilhafter Ausgestaltungen wird auf die abhängigen Ansprüche 2 bis 9 und 11 sowie 12 verwiesen.

Durch die erfindungsgemäße Verlagerung der Schwenkachse ist im Heckabschlußbereich des Deckelteils keinerlei Einschränkung an die Lage der Rückleuchten oder der Abschlußkante des Deckelteils gegeben. Die Ladekante kann daher sehr niedrig angesetzt werden. Ebenso ist das Design der Rückleuchten nicht durch Anforderungen an die Lage der Schwenkachse begrenzt.

Außerdem ergeben sich besondere Vorteile hinsichtlich der Kofferraumnutzung, da dann die Breite des Bodenbereiches voll zur Verfügung steht und eventuelle Stützböcke oder dergleichen, die die Schwenkachse umfassen, in den oben liegenden Seitenbereichen angeordnet sein können, ohne daß im unteren Bereich des Kofferraums, der als Auflagefläche für Gepäck dient, irgendeine Einschränkung erfolgen müßte. Um zu vermeiden, daß der durch die Verlagerung der Schwenkachse des Hilfsrahmens erreichte Raumgewinn durch das zusätzliche Antriebs- oder antriebsunterstützende Element wieder verloren geht, ist letzteres besonders günstig in Fahrtrichtung vor der Schwenkachse des Hilfsrahmens gelegen.

Mit einer vorgesehenen Möglichkeit der Relativbewegung zwischen dem Deckelteil und dem Hilfsrahmen kann bei Öffnung des Deckelteils zur Aufnahme von Gepäck dieses unabhängig vom Hilfsrahmen, etwa über ein Mehrgelenk, bewegt werden, der Hilfsrahmen behält seine Ruhestellung bei, wodurch der Bewegungsablauf vereinfacht ist und nur geringe Massen zu bewegen sind.

Wenn zum Ermöglichen der Relativbewegung zwischen dem Hilfsrahmen und dem Deckelteil ein weiteres Antriebs- oder antriebsunterstützendes Organ vorgesehen ist, kann die Öffnungsbewegung des Deckelteils zur Freigabe der Durchtrittsöffnung für das Dach mehrstufig automatisiert ablaufen.

Eine besonders günstige Bewegungsabfolge ergibt sich dann, wenn zunächst das Deckelteil zur Freigabe der Durchtrittsöffnung für das Dach in einer ersten Bewegungsphase mit seinem rückwärtigen Teil angehoben wird und in einer weiteren Bewegungsphase um eine nach vorne verlagerte Schwenkachse nach hinten aufschwenkt.

Besonders günstig ist dabei die Aufschwenkbewegung nach hinten derart durchzuführen, daß das rückwärtige Ende des Deckelteils unterhalb und hinter seiner Ausgangsstellung gelegen ist, weil dadurch die Öffnungshöhe des aufschwenkenden Deckelteils vermindert ist, so daß die Gefahr eines Anschlagens, etwa an ein Garagendach, minimiert ist.

Weitere Vorteile und Einzelheiten ergeben sich aus nachfolgend beschriebenen und in der Zeichnung dargestellten Ausführungsbeispielen des Gegenstandes der Erfindung.

In der Zeichnung zeigt:
- Fig. 1: den Heckbereich eines erfindungsgemäßen Cabriolet-Fahrzeugs in schematischer Ansicht bei geschlossenem Deckelteil,
- Fig. 2: eine ähnliche Ansicht wie Fig. 1 während der ersten Bewegungsphase zur Öffnung des Deckelteils zur Freigabe der Durchtrittsöffnung für das Dach,
- Fig. 3: eine ähnliche Ansicht wie Fig. 2 während der daran anschließenden zweiten Bewegungsphase während der Öffnung des Deckelteils zur Freigabe der Durchtrittsöffnung für das Dach,
- Fig. 4: eine ähnliche Ansicht wie Fig. 1 bei Freigabe der Aufnahmeöffnung für Gepäck,
- Fig. 5: eine ähnliche Ansicht wie Fig. 1 eines alternativen Ausführungsbeispiels,
- Fig. 6: eine ähnliche Ansicht wie Fig. 5 eines alternativen Ausführungsbeispiels,
- Fig. 7: eine ähnliche Ansicht wie Fig. 6 eines weiteren alternativen Ausführungsbeispiels mit hydraulischen Antriebszylindern,
- Fig. 8: eine ähnliche Ansicht wie Fig. 7 einer weiteren Alternativausführung,

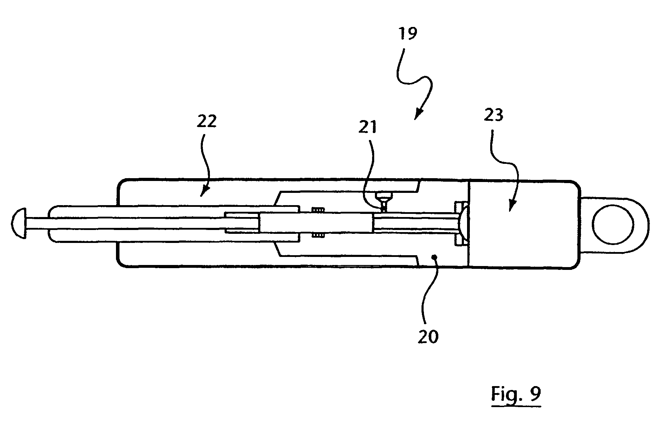

- Fig. 9: eine Detailansicht eines Antriebsorgans.

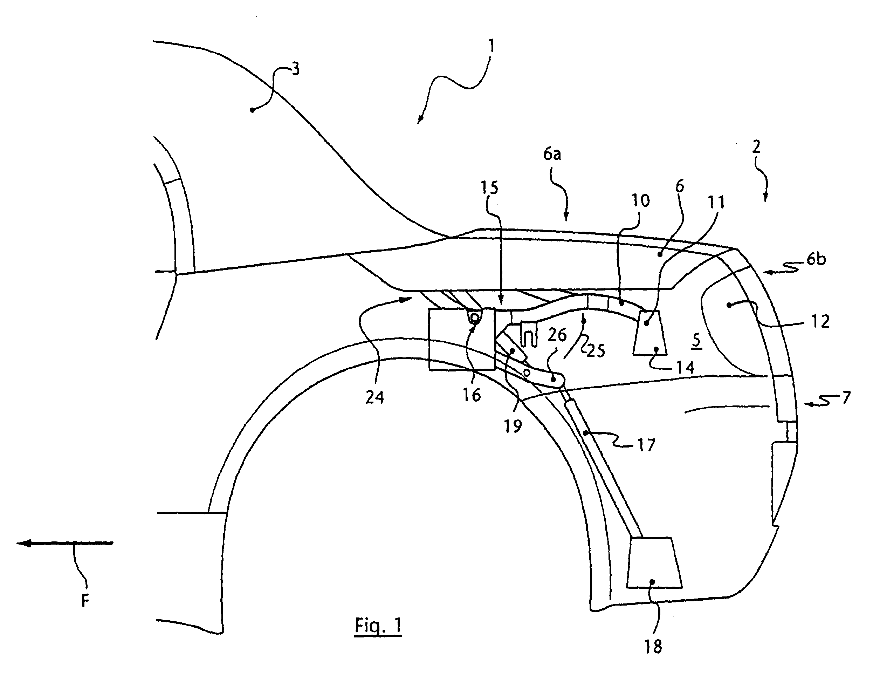

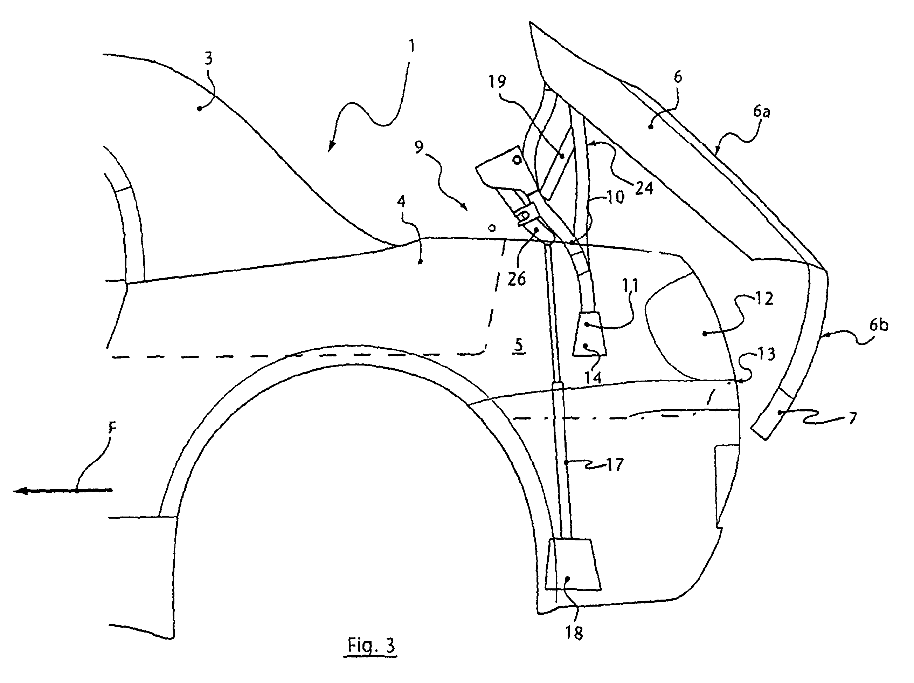

Das in den Figuren 1 bis 4 gezeigte Cabriolet-Fahrzeug 1 gemäß einem ersten Ausführungsbeispiel umfaßt ein in seinem rückwärtigen Fahrzeugbereich 2 ablegbares Dach 3, das sowohl vollständig starr oder flexibel oder bereichsweise starr ausgebildet sein kann. Das Dach 3 ist in einem Verdeckkasten 4 ablegbar, der in Fig. 3 durch gestrichelte Linien angedeutet ist. Der Verdeckkasten 4 kann insgesamt vom Kofferraum 5 permanent oder variabel abgetrennt sein, dieses ist jedoch nicht zwingend.

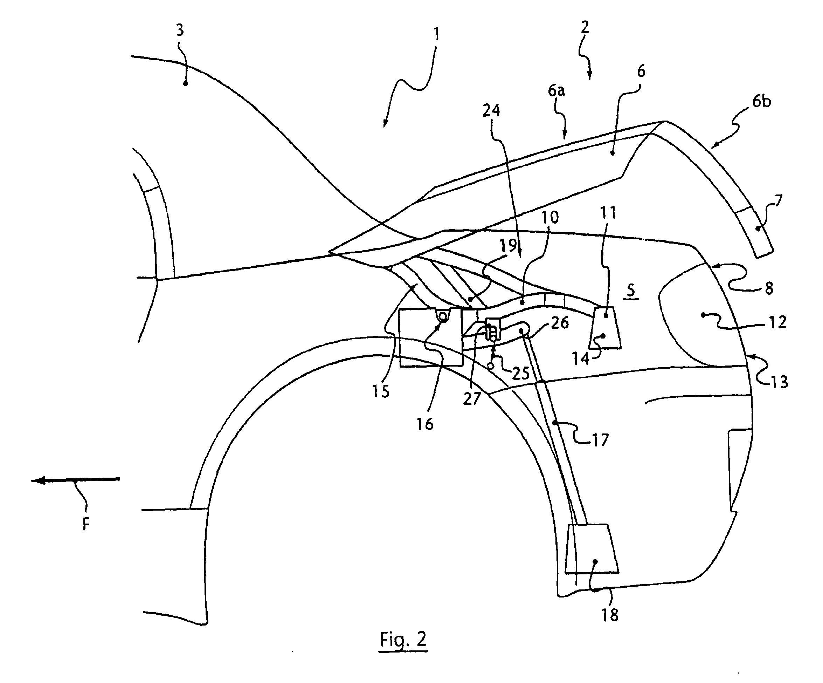

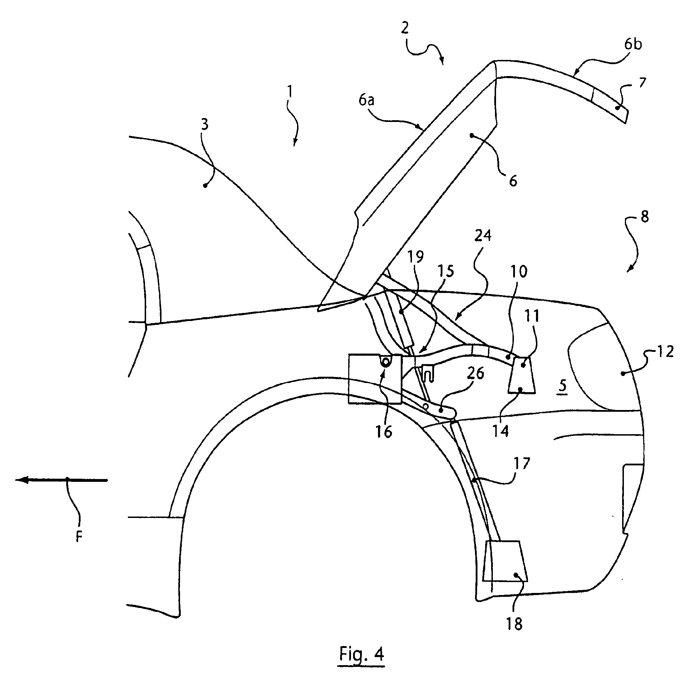

Zumindest ein Teil des Verdeckkastens 4 ist von einem Deckelteil 6 übergriffen, das einerseits (Fig. 2, Fig. 3) zur Freigabe einer Durchtrittsöffnung 9 für das Dach 3 in einem ersten Bewegungsablauf geöffnet werden kann und andererseits (Fig. 4) zur Freigabe einer seinem hinteren Endbereich 7 benachbarten Aufnahmeöffnung 8 für Gepäck in einem zweiten Bewegungsablauf geöffnet werden kann. Die Öffnung im ersten Sinne ist unterstützt durch einen Hilfsrahmen 10, der an der Karosserie an einer Schwenkachse 11 beweglich gelagert ist und der das Deckelteil 6 unterstützend untergreift. Die Schwenkachse 11 verläuft dabei quer zur Fahrtrichtung F des Fahrzeugs 1. Im gezeigten Ausführungsbeispiel ist die Schwenkachse 11 vor dem rückwärtigen Ende 7 des Deckelteils 6 derart gelegen, daß sie von den Rückleuchten 12 beabstandet ist, typischerweise um ca. 10 cm bis 40 cm. Auch andere Abstände sind möglich.

Das Deckelteil 6 umfaßt einen im wesentlichen in geschlossener Stellung horizontal verlaufenden Abdeckbereich 6a und einen im wesentlichen vertikal angrenzenden Heckabschlußbereich 6b, der sich im Endbereich 7 bis zu einer Trennungsfuge 13 gegenüber der Karosserie erstreckt. Die Schwenkachse 11 ist dabei auch oberhalb dieser Trennungsfuge 13 gelegen, wodurch etwa eine untere Abschlußebene des Kofferraums 5 (in Fig. 3 strichpunktiert gezeichnet) unbeeinflußt von die Schwenkachse 11 aufnehmenden Lagerböcken 14 oder dergleichen ist.

In Ruhestellung des Hilfsrahmens 10 (Fig. 1) ist dieser mit einem der Schwenkachse 11 abgewandten Ende 15, beispielsweise über seitliche Zapfen, in einer weiteren Halterung, etwa einem Schloß 16, blockiert gehalten. Um den Hilfsrahmen 10 aus dieser Stellung heraus in die Öffnungsstellung zur Freigabe der Durchtrittsöffnung 9 für das Dach 3 (Fig. 2, Fig. 3) bewegen zu können, ist zumindest ein, vorteilhaft an jeder Fahrzeugseite ein, Antriebs- oder antriebsunterstützendes Element 17 vorgesehen. Diese antriebsunterstützenden Elemente 17 sind im Ausführungsbeispiel als Gasdruckzylinder ausgebildet. Auch Hydraulikzylinder oder dergleichen sind möglich. Das Antriebsoder antriebsunterstützende Element 17 ist selber an einer in Fahrtrichtung F vor der Schwenkachse 11 gelegenen Aufnahme 18 gehalten.

An jeder Fahrzeugseite ist zusätzlich ein zweites Antriebs- oder antriebsunterstützendes Element 19 vorgesehen, das sich zwischen dem Hilfsrahmen 10 und dem horizontalen Bereich 6a des Deckelteils 6 erstreckt. Diese zweiten antriebsunterstützenden Organe 19 sind im ersten Ausführungsbeispiel (Fig. 1 bis Fig. 4) ebenfalls als Gasdruckzylinder ausgebildet. Zusätzlich sind sie mit der Möglichkeit versehen, ihre Bewegung zu blockieren und somit den Abstand zwischen dem Hilfsrahmen 10 und dem Deckelteil 6 in solchen Bewegungs- oder Ruhephasen, in denen die Blockierung aktiv ist, konstant zu halten. Hierfür ist in dem Kolben 20 des antriebsunterstützenden Organs 19 ein Ventil 21 vorgesehen, das die Kolbenstangenseite 22 von der Kolbenbodenseite 23 trennt und dadurch in blockierter Stellung einen Gasaustausch zwischen diesen verhindert. Damit ist ein Einfahren oder Ausfahren des Kolbens 20 verhindert, der Gasdruckzylinder 19 ist blockiert. Bei geöffneter Stellung des Ventils 21 besteht eine Verbindung zwischen den Räumen 22 und 23, wodurch eine Kolbenbewegung möglich wird. Dieser kann dann gedämpft durch den Druck auf die Kolbenbodenseite 23 ausfahren. Das Schließen des Deckelteils 6 gegenüber dem Hilfsrahmen 10 geschieht gegen die Kraft aus der Gasdruckfeder 19.

Das Ventil 21 ist fernbedienbar, beispielsweise über einen Schalter vom Armaturenbrett aus, um dadurch die Blockierung aufheben zu können. Über das zweite Antriebs - oder antriebsunterstützende Organ 19 kann ein Mehrgelenk 24, hier als Viergelenk ausgebildet, mittels dessen das Deckelteil 6 gegenüber dem Hilfsrahmen 10 beweglich ist, geöffnet werden, sofern die Blockierung des Antriebsorgans 19 aufgehoben ist.

Um aus der geschlossenen Stellung gemäß Fig. 1 das Deckelteil 6 zur Freigabe der Durchtrittsöffnung 9 für das Dach 3 zu öffnen, wird (Fig. 2) zunächst der rückwärtige Bereich 7 des Deckelteils durch Schwenken angehoben, wobei dieses Anheben allein durch die ersten Antriebselemente 17 bewirkt wird und die zweiten Antriebsorgane 19 in der blockierten Stellung verbleiben. Ebenso verbleibt der Hilfsrahmen 10 in der verriegelten Ausgangsstellung, die er auch bei geschlossenem Deckelteil 6 innehat. Um die Öffnung des Deckelteils 6 im genannten Sinne trotz des in der Ausgangsstellung verbleibenden Hilfsrahmens 10 bewirken zu können, werden die ersten Antriebsorgane 17 ausgefahren. Ein jeweils damit verbundener Hebel 26 wird dadurch entlang dem Pfeil 25 aus seiner Ausgangsstellung aufwärts geschwenkt. An diesem Hebel 26 ist auch das zweite Antriebs- oder antriebsunterstützende Organ 19 angelenkt. Der Hebel 26 wird so weit aufwärts verschwenkt, daß er in einen Anschlag 27 des Hilfsrahmens 10 eingreift. Dadurch ist eine weitere Öffnung in dem genannten Sinne verhindert, die erste Bewegungsphase zur Freigabe der Durchtrittsöffnung 9 für das Dach 3 ist dann abgeschlossen. In der dann anschließenden zweiten Bewegungsphase erfolgt das Aufschwenken des Hilfsrahmens 10 um die Schwenkachse 11, ebenfalls bewirkt durch weiteren Ausschub des ersten Antriebsorgans 17. Das zweite Antriebs- oder antriebsunterstützende Organ 19 bleibt während der gesamten Bewegung blockiert.

Um die zweite Bewegungsphase einleiten zu können, muß die Verriegelung des vorderen Teils 15 des Hilfsrahmens 10 in dem Schloß 16 zunächst aufgehoben werden. Die weitere Ausschubbewegung des ersten Antriebselements 17 führt dann aufgrund des Anschlagens des Hebels 26 an dem Anschlag 27 zwangsläufig zur erwähnten Schwenkbewegung um die Schwenkachse 11. Dabei verbleibt das Deckelteil bezüglich des Hilfsrahmens 10 in der leicht geöffneten Winkelstellung. Somit ist es möglich, trotz der nach vorne verlagerten Schwenkachse 11 ein Anschlagen des rückwärtigen Endbereiches 7 des Deckelteils 6 an der Karosserie zu vermeiden. Dieses wird entgegen der Fahrtrichtung F hinter den rückwärtigen Endbereich der Karosserie geschwenkt und kann somit in seiner Endstellung auch unterhalb der Trennungsfuge 13 liegen. Eine Kollision des Deckelteils 6 mit der Karosserie ist aufgrund der Rückwärtsverlagerung dabei ausgeschlossen.

Durch die veränderte Schwenkkinematik bleibt die Vorderkante des Deckelteils 6 auch während der in Fig. 3 gezeigten Freigabe der Durchtrittsöffnung 9 für das Dach 3 relativ niedrig, da der Schwenkradius kleiner ist als bei einer Anordnung der Schwenkachse am rückwärtigen Endbereich 7 des Deckelteils 6. Dadurch, daß dieses abwärts verlagert wird, bleibt insgesamt das Deckelteil 6 in einer relativ niedrigen Lage und kann dabei seine maximale Höhe etwa im Bereich der maximalen Höhe des Daches 3 halten. Somit ist der Gefahr eines Anschlagens des Deckelteils 6 etwa an einem niedrigen Garagendach zuverlässig vorgebeugt.

Die Bewegung des Deckelteils 6 zur Freigabe der Beladeöffnung 8 für Gepäck (Fig. 4) erfolgt bei fest liegendem Hilfsrahmen 10 und eingefahrenem erstem Antriebselement 17. Hier wird lediglich das Mehrgelenk 24 geöffnet, wozu das Antriebs- oder antriebsunterstützende Organ 19 ausfährt.

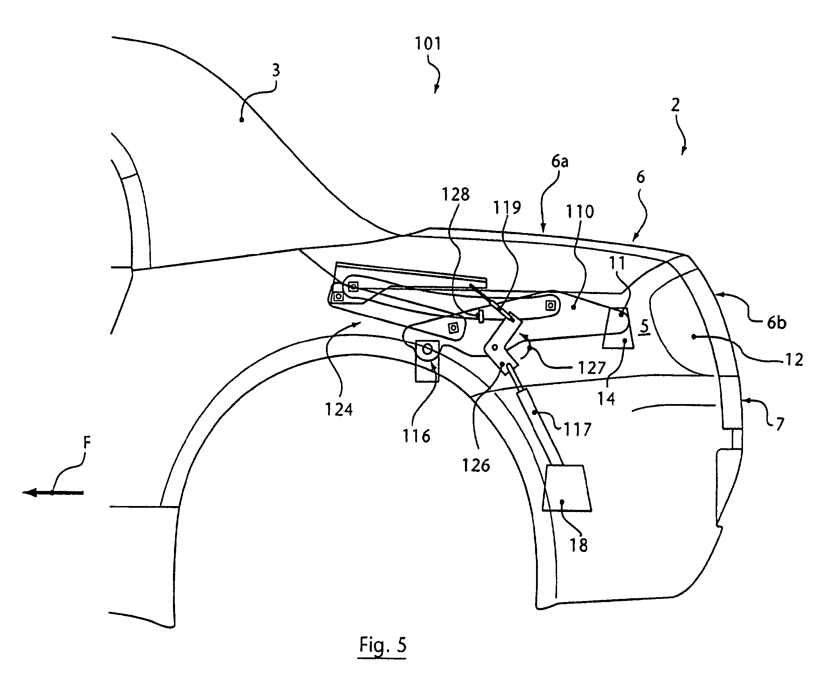

In Fig. 5 ist ein weiteres Ausführungsbeispiel gezeigt, das prinzipiell ähnlich wie das in den Figuren 1 bis 4 ausgebildet ist. Hier wird ebenfalls zum Öffnen des Deckelteils 6 zunächst über einen Ausschub des ersten Antriebselements 117 ein Aufschwenken des hinteren Endes 7 des Deckelteils 6 bewirkt. Dabei ist das zweite Antriebsorgan 119 blockiert. Der eingezeichnete Schwenkhebel 126, der an dem Hilfsrahmen 110 angelenkt ist und das erste Antriebselement 117 mit dem zweiten Antriebsorgan 119 verbindet, verschwenkt dabei in Richtung des Pfeils 127. Dabei bleibt der Hilfsrahmen in dem Schloß 116 gehalten. Sobald der Schwenkhebel 126 an dem Vertikalanschlag 128 anschlägt, wird das Schloß 116 gelöst, der weitere Ausschub des ersten Antriebselements 117 bewirkt dann das Aufschwenken um die Schwenkachse 11. Das Viergelenk 124 bleibt bei der gesamten Öffnung in diesem Sinne geschlossen und öffnet lediglich bei dem gegensinnigen Bewegungsablauf zur Freigabe der Aufnahmeöffnung 8 für Gepäck.

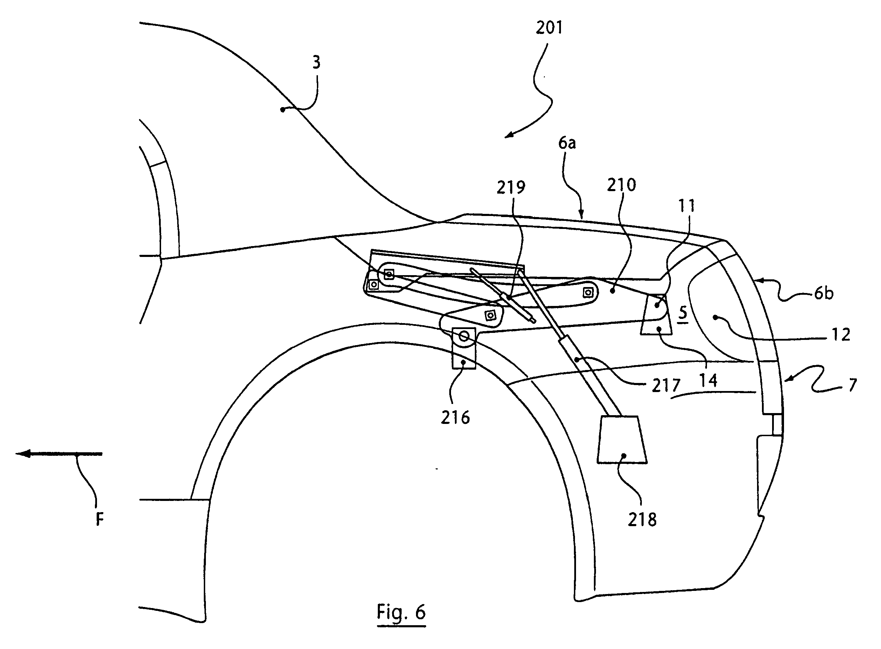

In ähnlicher Weise verläuft auch in dem Ausführungsbeispiel nach Fig. 6 der Bewegungsablauf in seinen beiden Phasen. Dabei wird in einem ersten Schritt durch Ausschub des ersten Antriebselements 217 die Aufschwenkbewegung des rückwärtigen Bereichs 7 bewirkt. Das zweite Antriebsorgan 219 ist hierbei allerdings nicht blockiert, da dieses zu einem Verkanten führen würde. Im Unterschied zu den vorherigen Lösungen erstreckt sich das erste Antriebselement 217 von der karosserieseitigen Lagerung 218 bis zum Deckelteil 6, wobei das Deckelteil 6 über das zweite Antriebsorgan 219 mit dem Hilfsrahmen 210 verbunden ist. Dieser wird nach Lösung des Schlosses 216 bewegbar um die Achse 11, so daß dann in der zweiten Bewegungsphase wiederum das Aufschwenken um diese Achse 11 erreicht werden kann.

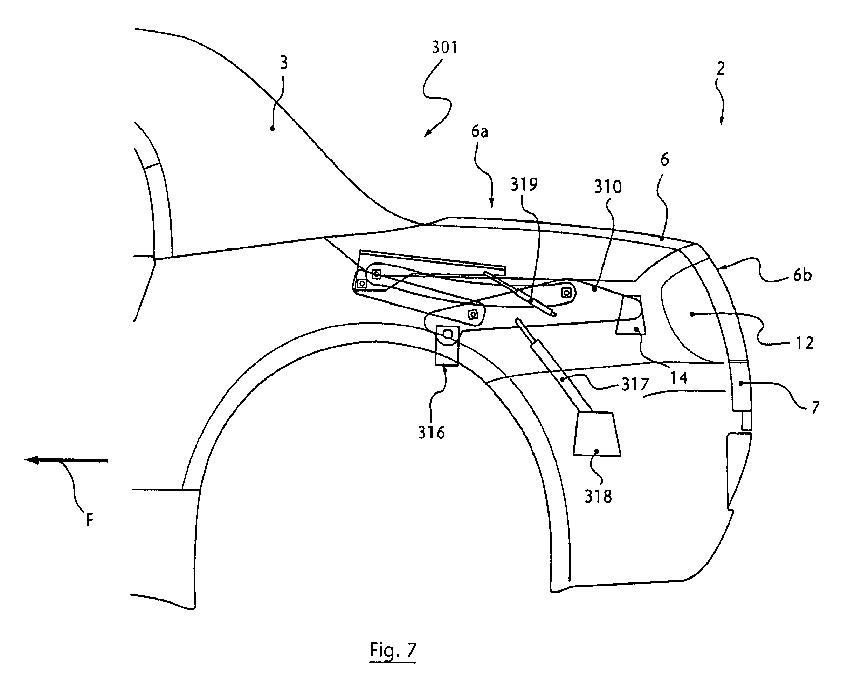

Die Lösung nach Fig. 7 ist der in Fig. 5 gezeigten ähnlich, wobei die Antriebselemente 317 und 319 jeweils als Hydraulikzylinder ausgebildet sind.

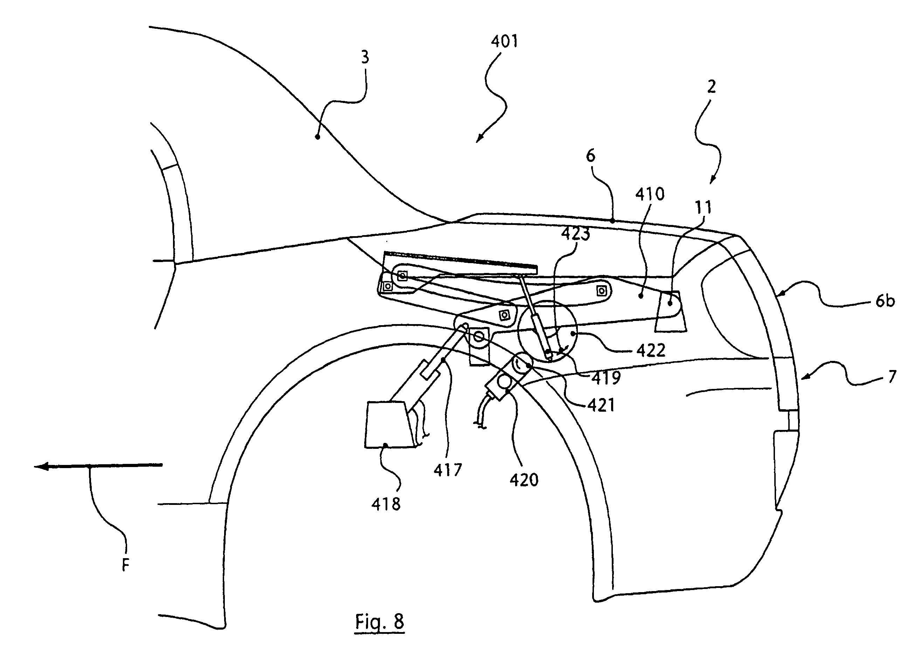

In der Variante nach Fig. 8 ist die Anlenkung 418 des ersten Antriebselements 417 in den Radkastenbereich verlegt. Das Antriebselement 417 greift dabei anderenends am Hilfsrahmen 410 an. Des weiteren ist ein elektro-motorischer Antrieb 420 vorgesehen, der über eine Antriebswalze 421 auf eine exzentrische Scheibe 422 einwirken kann, wobei diese Scheibe 422 als Lagerung für das zweite Antriebsorgan 419 dient.

Zur Öffnung des Deckelteils über den Bewegungsablauf, in dem die Ablagemöglichkeit für das Dach 3 ermöglicht wird, wird zunächst über den motorischen Antrieb 420 auf die Exzenterscheibe 422 eine Rotationskraft in Richtung des Pfeils 423 ausgeübt. Damit wird über das Antriebselement 419 eine Kraft in Aufschwenkrichtung des hinteren Deckelteils 7 bewirkt. Aus der so angehobenen Stellung wird dann mittels Ausfahren des ersten Antriebselements 417 das Deckelteil ähnlich wie in Fig. 3 zur Freigabe der Durchtrittsöffnung 9 für das Dach 3 geöffnet.

Bei allen gezeigten Ausführungsbeispielen wird zur Freigabe der Durchtrittsöffnung 9 für das Dach 3 zunächst das rückwärtige Ende 7 des Deckelteils 6 angehoben und dann erst die Schwenkbewegung um die Achse 11 eingeleitet, die schließlich dazu führt, daß das rückwärtige Ende 7 unterhalb der Trennungsfuge 13 liegt und somit eine niedrige Schwenkbahn erreicht ist. Zudem kann ein herkömmliches Heckklappenschloß im Bereich der Trennungsfuge 13 verwendet werden, weil dort keine Teile der Schwenkmechanik angeordnet sind. Dies vereinfacht die Montage und senkt die Produktionskosten deutlich.

Durch die veränderte Schwenkkinematik kann außerdem eine sehr große Durchtrittsöffnung 9 für das Dach 3 geschaffen werden. Durch die Blockierung des Mehrgelenks ist eine hohe Stabilität des Deckelteils während der Öffnung geschaffen.

## Patentansprüche

1. Cabriolet-Fahrzeug (1;101;201;301;401) mit einem im rückwärtigen Fahrzeugbereich (2) unterhalb eines Deckelteils (6) ablegbaren Dach (3), wobei das Deckelteil (6) einerseits zur Freigabe einer seinem vorderen Endbereich benachbarten Durchtrittsöffnung (9) für das Dach (3) und andererseits zur Freigabe einer seinem hinteren Endbereich (7) benachbarten Aufnahmeöffnung (8) für Gepäck auf und zu beweglich ist und wobei unterhalb des Deckelteils (6) ein Hilfsrahmen (10;110;210;310;410) vorgesehen ist, der an der Fahrzeugkarosserie schwenkbar angelenkt und um eine quer zum Fahrzeug verlaufende Achse (11) schwenkbeweglich ist, **dadurch gekennzeichnet, daß** das Deckelteil (6) einen im wesentlichen vertikalen Heckabschlußbereich (6b) aufweist, der sich bis zu einer an eine Trennungsfuge (13) gegenüber der Karosserie angrenzenden Abschlußkante erstreckt, wobei die Schwenkachse (11) des Hilfsrahmens (10;110;210;310;410) gegenüber dieser Abschlußkante, bei schlossenem Deckelteil, nach oben verlagert ist und das und daß die Schwenkachse (11) des Hilfsrahmens (10;110;210;310;410) in Fahrtrichtung (F) vor dem rückwärtigen Ende (7) des Deckelteils (6) angeordnet ist.

2. Cabriolet-Fahrzeug nach Anspruch 1, **dadurch gekennzeichnet, daß** sich die Schwenkachse (11) im wesentlichen oberhalb der Rückleuchten (12) und in Fahrtrichtung (F) vor den Rückleuchten (12) befindet.

3. Cabriolet-Fahrzeug nach einem der Ansprüche 1 oder 2, **dadurch gekennzeichnet, daß** der Hilfsrahmen (10;110;210;310;410) in geschlossenem Zustand des Deckelteils (6) und bei Bewegung zur Freigabe der Beladeöffnung (8) für den Kofferraum (5) in einer Ausgangsstellung verbleibt und aus dieser Stellung über ein Antriebs- oder antriebsunterstützendes Element (17;117;217;317;417) ausfahrbar ist.

4. Cabriolet-Fahrzeug nach Anspruch 3, **dadurch gekennzeichnet, daß** das Antriebs- oder antriebsunterstützende Element (17; 117;217;317;417) gegenüber der Karosserie in einem in Fahrtrichtung (F) vor der Schwenkachse (11) des Hilfsrahmens (10; 110;210;310;410) liegenden Bereich abgestützt ist.

5. Cabriolet-Fahrzeug nach einem der Ansprüche 1 bis 4, **dadurch gekennzeichnet, daß** zwischen Hilfsrahmen (10;110;210;310;410) und Deckelteil (6) ein weiteres Antriebs- oder antriebsunterstützendes Organ (19;119;219;319;419) angeordnet ist, das bei Freigabe der Durchtrittsöffnung (8) für das Dach (3) in einer eingefahrenen Stellung verbleibt und in dieser eingefahrenen Stellung blockierbar ist.

6. Cabriolet-Fahrzeug nach Anspruch 5, **dadurch gekennzeichnet, daß** das weitere Antriebs- oder antriebsunterstützende Organ (19;119;219;319;419) zumindest ein Gasdruckzylinder ist, der in Sicherungsstellung einen Gasaustausch zwischen seiner Kolbenstangenseite (22) und seiner Kolbenbodenseite (23) blockiert.

7. Cabriolet-Fahrzeug nach Anspruch 6, **dadurch gekennzeichnet, daß** der Gasdruckzylinder (19;119;219;319;419) ein Ventil (21) zur Freigabe eines Gasaustausches zwischen der Kolbenstangenseite (22) und der Kolbenbodenseite (23) umfaßt.

8. Cabriolet-Fahrzeug nach Anspruch 7, **dadurch gekennzeichnet, daß** das Ventil (21) fernbedienbar ist.

9. Cabriolet-Fahrzeug nach einem der Ansprüche 1 bis 8, **dadurch gekennzeichnet, daß** zur Öffnung des Deckelteils (6) zur Freigabe der Aufnahmeöffnung (8) für Gepäck das Deckelteil (6) gegenüber dem dabei feststehenden Hilfsrahmen (10;110;210;310;410) über ein Mehrgelenk (24) zu öffnen ist.

10. Verfahren zur Betätigung eines Deckelteils (6) eines Cabriolet-Fahrzeugs (1;101;201;301;401) wobei im rückwärtigen Fahrzeugbereich (2) unterhalb dieses Deckelteils (6) ein Dach (3) abgelegt wird, und das Deckelteil (6) in einem ersten Bewegungsablauf zur Freigabe einer seinem vorderen Endbereich benachbarten Durchtrittsöffnung (9) für das Dach (3) und in einem alternativ hierzu durchführbaren zweiten Bewegungsablauf zur Freigabe einer seinem hinteren Endbereich (7) benachbarten Aufnahmeöffnung (8) für Gepäck auf und zu beweglich ist, **dadurch gekennzeichnet, daß** der erste Bewegungsablauf zur Freigabe der Durchtrittsöffnung (9) für das Dach (3) zunächst ein Öffnen des hinteren Endbereiches (7) des Deckelteils (6) und nachfolgend ein Aufschwenken des gesamten Deckelteils (6) um eine gegenüber dem hinteren Endbereich (7) nach vorne verlagerte Schwenkachse (11) umfaßt.

11. Verfahren nach Anspruch 10, **dadurch gekennzeichnet, daß** dem Deckelteil (6) ein Hilfsrahmen (10;110;210;310;410) zugeordnet ist, der in dem ersten Bewegungsablauf zur Freigabe der Durchtrittsöffnung (9) für das Dach beim Öffnen des hinteren Endbereichs (7) des Deckelteils (6) in einer blockierten Ausgangsstellung gehalten ist und während des darauf folgenden Aufschwenkens des gesamten Deckelteils (6) aus dieser blockierten Stellung gelöst ist.

12. Verfahren nach einem der Ansprüche 10 oder 11, **dadurch gekennzeichnet, daß** während der Schwenkbewegung zur Freigabe der Durchtrittsöffnung (9) für das Dach (3) der hintere Endbereich (7) in eine gegenüber seiner geschlossenen Stellung nach hinten und unten verlagerte Stellung beweglich ist.

## Claims

1. A cabriolet vehicle (1;101;201;301;401) with a roof (3) which can be stored in the rear vehicle area (2) under a cover part (6), whereby the cover part (6) can be moved open and closed, on the one hand, in order to free a passage opening (9), adjacent its front end area, for the roof (3) and, on the other hand, in order to free a receiving opening (8), adjacent its back end area (7), for luggage, and whereby an auxiliary frame (10;110;210;310;410) is provided under the cover part (6), which auxiliary frame is pivotably linked to the vehicle body and is pivotally movable around an axle (11) which runs transverse to the vehicle, **characterised in that** the cover part (6) has a substantially vertical rear apron area (6b), which extends up to a terminating edge which borders on a separation joint (13) opposing the body, whereby the pivot axle (11) of the auxiliary frame (10;110;210;310;410), opposing this terminating edge, is displaced upwardly when the cover part is closed, and **in that** the pivot axle (11) of the auxiliary frame (10;110;210;310;410) is arranged in front of the rear end (7) of the cover part (6) in the direction of travel (F).

2. The cabriolet vehicle according to Claim 1, **characterised in that** the pivot axle (11) is located substantially above the rear lights (12) and in front of the rear lights (12) in the direction of travel (F).

3. The cabriolet vehicle according to one of Claims 1 or 2, **characterised in that**, when the cover part (6) is in the closed state and when movement occurs in order to free the loading opening (8) for the boot (5), the auxiliary frame (10;110;210;310;410) remains in a starting position and can be made to travel out of this position using a drive or drive-assisting element (17;117;217;317;417).

4. The cabriolet vehicle according to Claim 3, **characterised in that** the drive or drive-assisting element (17;117;217;317;417) is supported, in relation to the body, in an area which is situated in front of the pivot axle (11) of the auxiliary frame (10;110;210;310;410) in the direction of travel (F).

5. The cabriolet vehicle according to one of Claims 1 to 4, **characterised in that**, between the auxiliary frame (10;110;210;310;410) and the cover part (6), a further drive or drive-assisting member (19;119;219;319;419) is arranged, which, when the passage opening (8) is freed for the roof (3), remains in a retracted position and is able to be blocked in this retracted position.

6. The cabriolet vehicle according to Claim 5, **characterised in that** the further drive or drive-assisting member (19;119;219;319;419) is at least a gas pressure cylinder, which, in the secure position, blocks a gas exchange between its piston rod side (22) and its piston head side (23).

7. The cabriolet vehicle according to Claim 6, **characterised in that** the gas pressure cylinder (19;119;219;319;419) includes a valve (21) in order to provide freedom for a gas exchange between the piston rod side (22) and the piston head side (23).

8. The cabriolet vehicle according to Claim 7, **characterised in that** the valve (21) is able to be operated remotely.

9. The cabriolet vehicle according to one of Claims 1 to 8, **characterised in that**, to open the cover part (6) in order to free the receiving opening (8) for luggage, the cover part (6), opposing the auxiliary frame (10;110;210;310;410) which is fixed here, is to be opened using a multiplex hinge (24).

10. A method for actuating a cover part (6) of a cabriolet vehicle (1;101;201;301;401), whereby, in the rear vehicle area (2), a roof (3) is stored below this cover part (6), and the cover part (6) can be moved open and closed, In a first motion sequence, in order to free a passage opening (9), adjacent its front end area, for the roof (3), and in a second motion sequence which can be carried out alternatively to this, in order to free a receiving opening (8), adjacent its back end area (7), for luggage, **characterised in that** the first motion sequence for freeing the passage opening (9) for the roof (3) firstly includes opening the back end area (7) of the cover part (6) and subsequently pivoting up the entire cover part (6) around a pivot axle (11) which is displaced forwardly in relation to the back end area (7).

11. The method according to Claim 10, **characterised in that** an auxiliary frame (10;110;210;310;410) is associated with the cover part (6), which auxiliary frame, in the first motion sequence for freeing the passage opening (9) for the roof, is held in a blocked starting position when the back end area (7) of the cover part (6) is opened, and, during the subsequent pivoting up of the entire cover part (6) out of this blocked position, is released.

12. The method according to one of Claims 10 or 11, **characterised in that**, during the pivoting movement for freeing the passage opening (9) for the roof (3), the back end area (7) is able to be moved into a forwardly and downwardly displaced position in relation to its closed position.

## Revendications

1. Véhicule cabriolet (1 ; 101; 201 ; 301 ; 401) avec un toit (3) pouvant être rangé dans une région arrière du véhicule (2) sous une partie de couvercle (6), la partie de couvercle (6) pouvant être ouverte et fermée d'une part pour libérer une ouverture de passage (9) pour le toit (3) voisine de sa région d'extrémité avant et d'autre part pour libérer une ouverture de logement (8) pour des bagages voisine de sa région d'extrémité arrière (7), un cadre auxiliaire (10 ; 110 ; 210 ; 310 ; 410) étant prévu sous la partie de couvercle (6), lequel est articulé de manière pivotante à la carrosserie du véhicule et peut pivoter autour d'un axe (11) s'étendant transversalement au véhicule, **caractérisé en ce que** la partie de couvercle (6) présente une région de fermeture arrière essentiellement verticale (6b) qui s'étend jusqu'à une arête de fermeture adjacente à un joint de séparation (13) par rapport à la carrosserie, l'axe de pivotement (11) du cadre auxiliaire (10 ; 110 ; 210 ; 310 ; 410) étant décalé vers le haut par rapport à cette arête de fermeture lorsque la partie de couvercle est fermée, et **en ce que** l'axe de pivotement (11) du cadre auxiliaire (10 ; 110 ; 210 ; 310 ; 410) est disposé dans la direction de conduite (F) avant l'extrémité arrière (7) de la partie de couvercle (6).

2. Véhicule cabriolet selon la revendication 1, **caractérisé en ce que** l'axe de pivotement (11) se trouve essentiellement au-dessus des feux arrière (12) et dans la direction de conduite (F) avant les feux arrière (12).

3. Véhicule cabriolet selon l'une quelconque des revendications 1 ou 2, **caractérisé en ce que** le cadre auxiliaire (10 ; 110 ; 210 ; 310 ; 410) reste dans une position de départ dans l'état fermé de la partie de couvercle (6) et lors du mouvement de libération de l'ouverture de chargement (8) pour le compartiment à bagages (5) et peut être sorti de cette position par le biais d'un élément favorisant l'entraînement ou un élément d'entraînement (17 ; 117 ; 217 ; 317 ; 417).

4. Véhicule cabriolet selon la revendication 3, **caractérisé en ce que** l'élément favorisant l'entraînement ou l'élément d'entraînement (17 ; 117 ; 217 ; 317 ; 417) est supporté par rapport à la carrosserie dans une région située dans la direction de conduite (F) avant l'axe de pivotement (11) du cadre auxiliaire (10 ; 110 ; 210 ; 310 ; 410).

5. Véhicule cabriolet selon l'une quelconque des revendications 1 à 4, **caractérisé en ce que** l'on dispose entre le cadre auxiliaire (10 ; 110 ; 210 ; 310 ; 410) et la partie de couvercle (6) un autre organe d'entraînement ou favorisant l'entraînement (19 ; 119 ; 219 ; 319 ; 419), qui reste dans une position rentrée lors de la libération de l'ouverture de passage (8) pour le toit (3) et qui peut être bloqué dans cette position rentrée.

6. Véhicule cabriolet selon la revendication 5, **caractérisé en ce que** l'autre organe d'entraînement ou favorisant l'entraînement (19 ; 119 ; 219 ; 319 ; 419) est au moins un cylindre de pression à gaz qui bloque dans la position de fixation un échange de gaz entre son côté tige de piston (22) et son côté base de piston (23).

7. Véhicule cabriolet selon la revendication 6, **caractérisé en ce que** le cylindre de pression à gaz (19 ; 119 ; 219 ; 319 ; 419) comprend une soupape (21) pour libérer un échange de gaz entre le côté tige de piston (22) et le côté base de piston (23).

8. Véhicule cabriolet selon la revendication 7, **caractérisé en ce que** la soupape (21) peut être commandée à distance.

9. Véhicule cabriolet selon l'une quelconque des revendications 1 à 8, **caractérisé en ce que**, pour l'ouverture de la partie de couvercle (6) pour la libération de l'ouverture de logement (8) pour les bagages, la partie de couvercle (6) doit être ouverte par rapport au cadre auxiliaire (10 ; 110 ; 210 ; 310 ; 410) fixe dans ce cas, par le biais d'une articulation multiple (24).

10. Procédé pour actionner une partie de couvercle (6) d'un véhicule cabriolet (1 ; 101 ; 201 ; 301 ; 401), dans lequel dans la région arrière du véhicule (2) en dessous de cette partie de couvercle (6) est rangé un toit (3) et la partie de couvercle (6) peut être ouverte et fermée dans un premier déroulement de mouvement pour libérer une ouverture de passage (9) pour le toit (3) voisine de sa région d'extrémité avant et dans un deuxième déroulement, de mouvement pouvant être réalisé différemment, pour libérer une ouverture de logement (8) pour des bagages voisine de sa région d'extrémité arrière (7), **caractérisé en ce que** le premier déroulement de mouvement pour la libération de l'ouverture de passage (9) pour le toit (3) comprend d'abord une ouverture de la région d'extrémité arrière (7) de la partie de couvercle (6) puis un pivotement vers le haut de l'ensemble de la partie de couvercle (6) autour d'un axe de pivotement (11) décalé vers l'avant par rapport à la région d'extrémité arrière (7).

11. Procédé selon la revendication 10, **caractérisé en ce que** l'on associe à la partie de couvercle (6) un cadre auxiliaire (10 ; 110 ; 210 ; 310 ; 410) qui est maintenu dans le premier déroulement de mouvement pour libérer l'ouverture de passage (9) pour le toit lors de l'ouverture de la région d'extrémité arrière (7) de la partie de couvercle (6) dans une position de départ bloquée et est libéré de cette position bloquée pendant le pivotement vers le haut subséquent de l'ensemble de la partie de couvercle (6).

12. Procédé selon l'une quelconque des revendications 10 ou 11, **caractérisé en ce que**, pendant le mouvement de pivotement pour la libération de l'ouverture de passage (9) pour le toit (3), la région d'extrémité arrière (7) est déplaçable dans une position décalée vers l'arrière et vers le bas par rapport à sa position fermée.
